(19) Europäisches Patentamt
European Patent Office
Office européen des brevets

(11) **EP 3 575 888 B1**

(12) **FASCICULE DE BREVET EUROPEEN**

(45) Date de publication et mention
de la délivrance du brevet:
**12.04.2023 Bulletin 2023/15**

(21) Numéro de dépôt: **19175727.7**

(22) Date de dépôt: **21.05.2019**

(51) Classification Internationale des Brevets (IPC):
**G04B 39/00** *(2006.01)*

(52) Classification Coopérative des Brevets (CPC):
**G04B 39/008**

(54) **PIECE D'HORLOGERIE COMPORTANT UNE LENTILLE ASPHÉRIQUE**

UHR UMFASSEND EINE ASPHÄRISCHE LINSE

TIMEPIECE COMPRISING AN ASPHERIC LENS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.05.2018 EP 18175014**

(43) Date de publication de la demande:
**04.12.2019 Bulletin 2019/49**

(73) Titulaire: **ROLEX SA
1211 Genève 26 (CH)**

(72) Inventeurs:
• **CATHELINE, Adrien
74520 VALLEIRY (FR)**

• **JUNOD, Benoit
74130 CONTAMINE-SUR-ARVE (FR)**
• **PERSEGUERS, Sébastien
1700 FRIBOURG (CH)**

(74) Mandataire: **Moinas & Savoye SARL
27, rue de la Croix-d'Or
1204 Genève (CH)**

(56) Documents cités:
**EP-A1- 0 277 024      CH-A2- 710 775
FR-A- 1 130 973      JP-A- S61 205 889
US-A- 1 812 367      US-A1- 2006 062 090**

## Description

### Introduction

La présente invention concerne un dispositif optique pour pièce d'horlogerie. L'invention porte aussi sur une glace de pièce d'horlogerie comprenant un tel dispositif optique. Enfin, l'invention porte aussi sur une pièce d'horlogerie comprenant un tel dispositif optique.

### Etat de l'Art

Une solution traditionnelle pour optimiser la visibilité et améliorer le confort de lecture d'une indication sur une pièce d'horlogerie consiste à intégrer une lentille sur la pièce d'horlogerie qui agrandit l'indication à lire. Il apparaît toutefois que les solutions existantes permettent une lecture optimisée verticalement au-dessus de la lentille, mais sont moins performantes dès lors que le porteur de la pièce d'horlogerie est décalé par rapport à la pièce d'horlogerie et donc par rapport à la lentille. En pratique, il est constaté qu'un simple décalage au-delà de 10° environ, pour une lentille et un indicateur d'une indication horlogère donnés, ne permet plus de bénéficier de la lecture avantageuse de l'indication horlogère au travers de la lentille, ni même en dehors de la lentille. Ainsi, cette solution traditionnelle s'avère optimisable du fait d'une telle limitation d'utilisation.

Le document US2006/062090 décrit une glace de montre dont la forme est modifiable. Un utilisateur peut ainsi changer son rayon de courbure et ses propriétés optiques, pour les adapter à sa propre vision. Cette solution ne répond toutefois pas à l'inconvénient mentionné ci-dessus.

On connaît aussi le document FR1130973A qui divulgue une pièce d'horlogerie comportant une lentille disposée ailleurs et indépendamment de la glace, notamment sur le cadran.

L'invention a pour objectif général d'offrir une solution d'amélioration de la lecture d'une indication sur une pièce d'horlogerie, qui ne comprend pas tout ou partie des inconvénients de l'état de la technique.

Plus précisément, un premier objet de l'invention est d'offrir une solution plus conviviale de lecture d'une indication sur une pièce d'horlogerie. Notamment, l'objet général de l'invention est d'offrir une lecture agrandie d'une indication, visible sur une plage angulaire augmentée par rapport à l'état de la technique.

### Brève description de l'invention

A cet effet, l'invention repose sur une glace pour pièce d'horlogerie, telle que définie dans la revendication indépendante 1, ainsi que sur une pièce d'horlogerie, telle que définie dans la revendication indépendante 16. Des réalisations préférées de l'invention sont définies dans les revendications dépendantes.

### Brève description des figures

Ces objets, caractéristiques et avantages de l'invention seront exposés en détail dans la description suivante de modes de réalisation particuliers faits à titre non-limitatif en relation avec les figures jointes parmi lesquelles :

La figure 1 représente le positionnement de référence d'un observateur relativement à une pièce d'horlogerie selon un mode de réalisation de l'invention.

La figure 2 représente le positionnement décalé d'un observateur relativement à la pièce d'horlogerie selon le mode de réalisation de l'invention.

La figure 3 représente la plage angulaire d'observation de la pièce d'horlogerie selon le mode de réalisation de l'invention.

La figure 4 représente une section passant par un plan vertical médian d'un dispositif optique d'une glace d'une pièce d'horlogerie selon une première variante d'un premier mode de réalisation de l'invention.

La figure 5 représente une section passant par un plan vertical médian d'un dispositif optique d'une glace d'une pièce d'horlogerie selon une deuxième variante du premier mode de réalisation de l'invention.

La figure 6 représente une section passant par un plan vertical médian d'un dispositif optique d'une glace d'une pièce d'horlogerie selon une troisième variante du premier mode de réalisation de l'invention.

La figure 7 représente une section passant par un plan vertical médian d'un dispositif optique d'une glace d'une pièce d'horlogerie selon une quatrième variante du premier mode de réalisation de l'invention.

La figure 8 représente une section passant par un plan vertical médian d'un dispositif optique d'une glace d'une pièce d'horlogerie selon une première variante d'un deuxième mode de réalisation de l'invention.

La figure 9 représente une section passant par un plan vertical médian d'un dispositif optique d'une glace d'une pièce d'horlogerie selon une deuxième variante du deuxième mode de réalisation de l'invention.

La figure 10 illustre la géométrie d'un dispositif optique pour pièce d'horlogerie selon un mode de réalisation de l'invention.

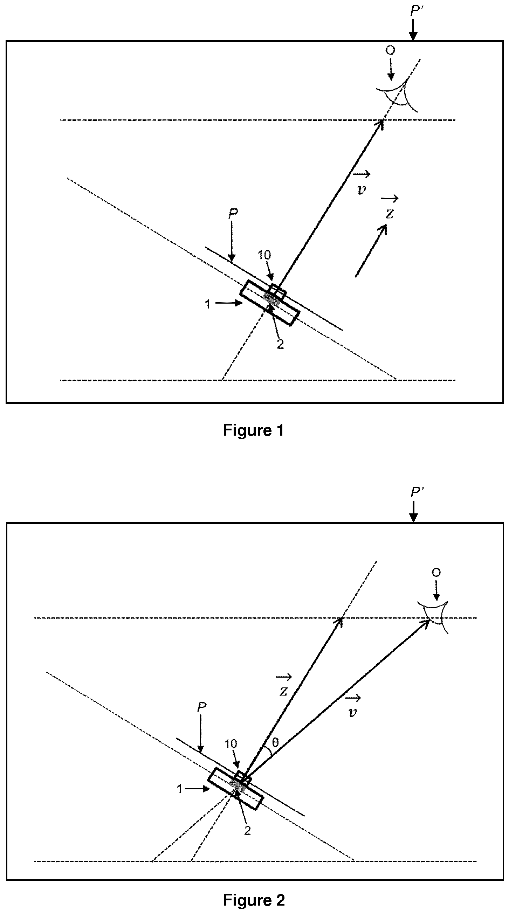

La figure 1 représente une pièce d'horlogerie 1 selon un mode de réalisation de l'invention, qui comprend au moins un indicateur 2, par exemple disposé au niveau d'un cadran. La pièce d'horlogerie comporte un dispositif optique 10 au niveau de sa surface supérieure, agencé sensiblement au-dessus de l'indicateur 2. La pièce d'horlogerie, et notamment sa surface supérieure, s'étend sensiblement dans un plan P, qui sera considéré par convention comme définissant une surface horizontale.

Pour faciliter la description qui va suivre, nous désignerons par direction verticale z la direction perpendiculaire au plan P horizontal de la pièce d'horlogerie. La figure 1 illustre le positionnement de référence d'un observateur O qui regarde la pièce d'horlogerie, et notamment l'indicateur 2, depuis une position située sur un axe vertical passant au centre de l'indicateur 2. Plus précisément, le vecteur v reliant l'indicateur à l'œil de l'observateur est orienté selon la direction verticale z. Cette position de référence de l'observateur est généralement celle qui lui permet la meilleure lisibilité de l'indicateur 2.

En complément, on définit l'adjectif « supérieur » pour désigner un composant ou une surface d'une pièce d'horlogerie orienté du côté d'un observateur O de la pièce d'horlogerie. Au contraire, l'adjectif « inférieur » désigne un composant ou une surface d'une pièce d'horlogerie orienté du côté opposé à un observateur de la pièce d'horlogerie, par exemple du côté du poignet d'un porteur dans le cadre d'une montre bracelet.

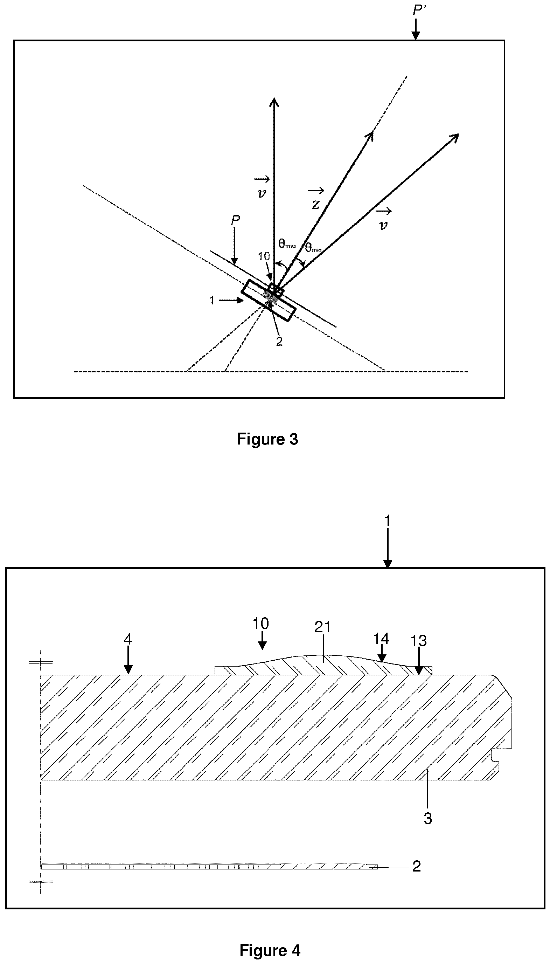

La figure 2 illustre un positionnement alternatif décalé d'un observateur O par rapport à la pièce d'horlogerie 1 relativement à la position de référence définie par la figure 1. Ce décalage est mesuré par l'angle $\Theta$ entre la direction verticale z susmentionnée et le vecteur v. En remarque, l'observateur peut se décaler dans une première direction située d'un certain côté par rapport à la direction verticale z ou dans une deuxième direction opposée relativement à cette même direction verticale. Dans ces deux directions, un observateur peut constater empiriquement respectivement les deux angles $\Theta$min et $\Theta$max, illustrés sur la figure 3, au-delà desquels un décalage supplémentaire ne lui permet plus de visualiser l'indicateur 2 de la pièce d'horlogerie.

En remarque, ces deux décalages sont de préférence constatés par un déplacement du regard de l'observateur dans un même plan P', qui serait un plan vertical passant par l'indicateur 2 et sensiblement parallèle avec une direction s'étendant des index horaires 6 et 12 de la pièce d'horlogerie, selon une approche traditionnelle de positionnement de ces index horaires. Naturellement, ce même décalage peut être réalisé selon des plans verticaux dans toutes les autres directions, pour permettre finalement de déterminer sensiblement un cône d'axe vertical centré sur l'indicateur, dans lequel la lisibilité de l'indicateur est bonne. Un tel cône pourrait avoir une base ellipsoïdale, définissant des angles minimal et maximal par rapport à ladite direction verticale, qui pourraient ainsi en variante définir les deux angles $\Theta$min et $\Theta$max.

Comme mentionné dans l'introduction de l'invention, le problème technique posé consiste donc à optimiser les deux angles $\Theta$min et $\Theta$max, c'est-à-dire à augmenter l'amplitude de la plage de bonne lisibilité ou visibilité. Autrement dit, l'invention cherche à permettre une bonne lisibilité ou visibilité de l'indicateur 2 selon un positionnement décalé accru d'un observateur.

Selon le concept de l'invention, un dispositif optique comprenant au moins une lentille comprenant au moins une portion de surface ou de face de forme asphérique est utilisé. Nous dirons aussi plus simplement que le dispositif optique comprend au moins une lentille comprenant au moins une face asphérique ou que le dispositif optique comprend au moins une face asphérique. Ce dispositif optique est agencé de sorte à se positionner entre l'indicateur et un observateur. Il est donc sensiblement superposé à un indicateur à observer, c'est-à-dire qu'il se trouve sensiblement au-dessus de cet indicateur.

Une telle face de forme asphérique est plus précisément définie par le fait qu'elle comprend au moins une section passant par un plan vertical comprenant l'axe optique de direction verticale z du dispositif optique, dont au moins un contour est une courbe qui peut être définie par l'équation (1) suivante :

$$z(r) = \frac{r^2}{R\left(1+\sqrt{1-(1-\kappa)\frac{r^2}{R^2}}\right)} + \alpha_4 r^4 + \alpha_6 r^6 + \cdots \ (1)$$

et où la condition suivante est vérifiée : la constante de conicité $\kappa$ ou au moins une valeur d'un coefficient d'asphéricité $\alpha_i$(i =4, 6, ...) est différente de zéro.

En notant $\varphi$ le décalage angulaire du plan vertical précité en regard d'une direction de référence perpendiculaire à l'axe optique de direction verticale z, $(r, \varphi, z)$, sont, dans cette équation (1), les coordonnées cylindriques usuelles, $R$ le rayon nominal de courbure, $\kappa$ la constante de conicité et $\alpha_{4,6,...}$ les coefficients d'asphéricité. En remarque complémentaire, le rayon nominal de courbure R correspond au rayon de courbure à la position r = 0.

Dans le cas particulier où ledit contour peut être définie par l'équation (1) quel que soit l'angle <p, le dit contour présente une symétrie de rotation autour de l'axe optique de direction verticale z.

Si tous les coefficients d'asphéricité $\alpha_{4,6,...}$ sont nuls, la constante de conicité $\kappa$ influe sur le type de forme de la section. Pour $\kappa = 0$, il s'agit d'un cercle, pour $\kappa = -1$ une parabole, pour $\kappa < -1$ une hyperbole et une ellipse dans les autres cas.

En remarque, les coefficients d'asphéricité $\alpha_{4,6,...}$ contribuent à modifier l'allure de la section initiale (c'est-à-dire celle qui serait définie par la même équation (1) avec tous les coefficients d'asphéricité nuls). Cette modification est d'autant plus grande que l'on s'éloigne de l'origine (c'est-à-dire d'autant plus que r est grand).

Ainsi, la face asphérique selon l'invention comprend au moins une section présentant une forme :

- parabolique, hyperbolique, ou ellipsoïdale, ou
- parabolique, hyperbolique, ou ellipsoïdale, modifiée par au moins un coefficient d'asphéricité non nul, ou
- circulaire modifiée par au moins un coefficient d'asphéricité non nul.

Ainsi, l'invention porte aussi sur un dispositif optique pour pièce d'horlogerie, caractérisé en ce que la au moins une face asphérique comprend au moins une section passant par un plan vertical dont au moins un contour est une courbe présentant une forme en portion de cercle modifiée par un coefficient d'asphéricité.

De plus, l'invention porte aussi sur un dispositif optique pour pièce d'horlogerie, caractérisé en ce que la au moins une face asphérique comprend au moins une section passant par un plan vertical dont au moins un contour est une courbe présentant une forme d'ellipse, de parabole ou d'hyperbole.

Il a donc été constaté une nette amélioration de la lisibilité et/ou visibilité d'une indication sur la base d'un tel dispositif optique présentant au moins une face asphérique. En pratique, la détermination de la forme asphérique précise de la portion de surface ou de face de la lentille peut être faite selon plusieurs approches.

Selon une approche privilégiée par la demanderesse, la forme asphérique peut être définie sur la base d'algorithmes d'optimisation composés de deux étapes successives. Dans une première étape, une recherche globale dans l'espace des surfaces asphériques permet de déterminer des familles de lentilles à fort potentiel optique. Cette recherche se base sur des algorithmes stochastiques, en particulier sur l'échantillonnage par hypercube latin et sur les algorithmes génétiques. Dans une deuxième étape, une recherche locale autour d'un représentant de chaque famille ainsi déterminée permet d'optimiser par itération la surface de la lentille jusqu'à l'apparition d'une solution satisfaisante. La méthode utilisée lors de cette seconde étape peut, par exemple, être une variation de l'optimisation par simplexe de Nelder-Mead.

Par « solution satisfaisante », nous entendons une solution permettant de répondre, au moins partiellement, aux objectifs antagonistes décrits ci-après :

- Augmenter autant que faire se peut l'intervalle [$\Theta$min, $\Theta$max] ;
- Agrandir de manière aussi constante que possible l'indication considérée, quel que soit l'angle $\Theta$ compris entre $\Theta$min et $\Theta$max ;
- Minimiser autant que faire se peut la distorsion de l'indication considérée risquant de prétériter la lecture de ladite indication.

Avec une telle approche, il apparaît alors, selon les études de la demanderesse, que l'intervalle [$\Theta$min, $\Theta$max] peut être maximisé de l'ordre de 100% en regard de l'intervalle connu de l'art antérieur, tout en agrandissant de manière constante l'indication considérée et en minimisant autant que faire se peut la distorsion de ladite indication.

Plus particulièrement, un dispositif optique comprenant au moins une lentille comprenant au moins une face asphérique dont la courbure diminue en fonction de r constitue une solution particulièrement adaptée permettant de répondre aux objectifs précités.

Les figures 4 à 9 représentent plus précisément des modes de réalisation de l'invention comprenant l'association d'au moins un dispositif optique selon l'invention à une glace de pièce d'horlogerie. Cette glace s'étend sensiblement horizontalement. Pour simplifier la lecture, nous utiliserons les mêmes références pour désigner des éléments identiques ou similaires dans les différents modes de réalisation.

Selon le premier mode de réalisation représenté par les figures 4 à 7, le dispositif optique 10 comprend une seule lentille 21, sensiblement au-dessus d'un indicateur 2, par exemple agencé au niveau d'un cadran d'une pièce d'horlogerie.

La figure 4 représente un dispositif optique 10 rapporté sur la surface supérieure 4 d'une glace 3 de montre, qui est sensiblement plane et horizontale selon ce mode de réalisation. Ce dispositif optique comprend une lentille 21 de surface inférieure 13 sensiblement horizontale fixée sur la surface supérieure 4 de la glace 3 de montre. Cette fixation peut se faire par tout moyen, comme un collage. Comme cela apparait sur la figure 4, la section du dispositif optique 10 est délimitée par une courbe supérieure correspondant à l'équation (1) explicitée précédemment, avec une constante de conicité ou au moins une valeur d'un coefficient d'asphéricité différente de zéro. Autrement dit, la surface supérieure 14 de la lentille 21 du dispositif optique 10 lui apporte son caractère asphérique, alors que sa surface inférieure 13 est sensiblement plane.

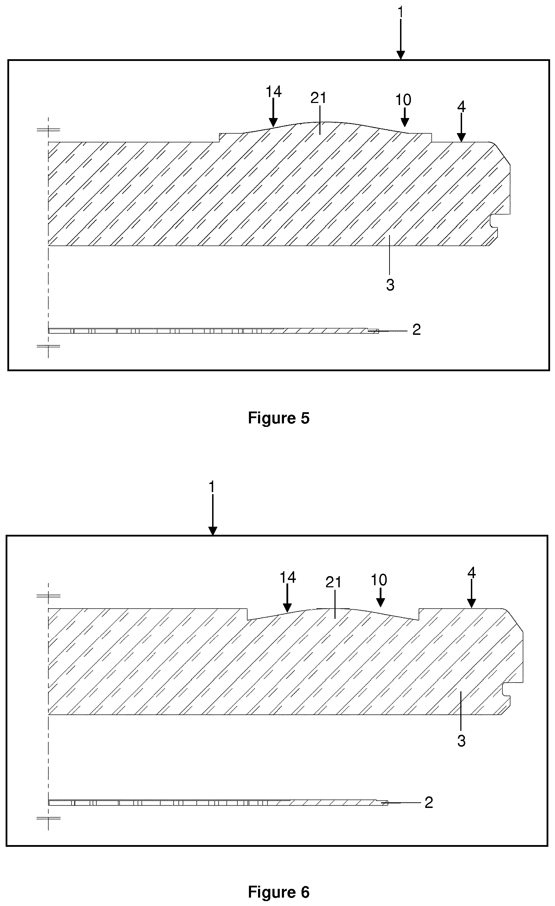

La figure 5 représente une deuxième variante du dispositif optique 10 selon le premier mode de réalisation de l'invention. Cette deuxième variante se différencie de la première variante de la figure 4 par le fait que le dispositif optique 10 et la glace 3 forment un ensemble monobloc. Autrement dit, le dispositif optique 10 n'est plus un élément distinct fixé sur la glace. Il se présente comme une partie de la glace 3 elle-même, formant une protubérance au-dessus de la surface supérieure 4 de la glace 3, pour former un ensemble dont la forme supérieure est globalement la même que dans le cas de la première variante de la figure 4.

La figure 6 illustre une troisième variante de réalisation dans laquelle le dispositif optique 10 et la glace 3 forment un ensemble monobloc. Toutefois, dans cette variante, le dispositif optique est façonné dans l'épaisseur de la glace 3. Ainsi, la face supérieure 14 asphérique de la lentille 21 reste sous le niveau de la surface supérieure 4 de la glace ou sensiblement au même niveau de de la surface supérieure 4 de la glace. En remarque, la surface supérieure 14 présente toujours une forme similaire aux deux variantes précédentes.

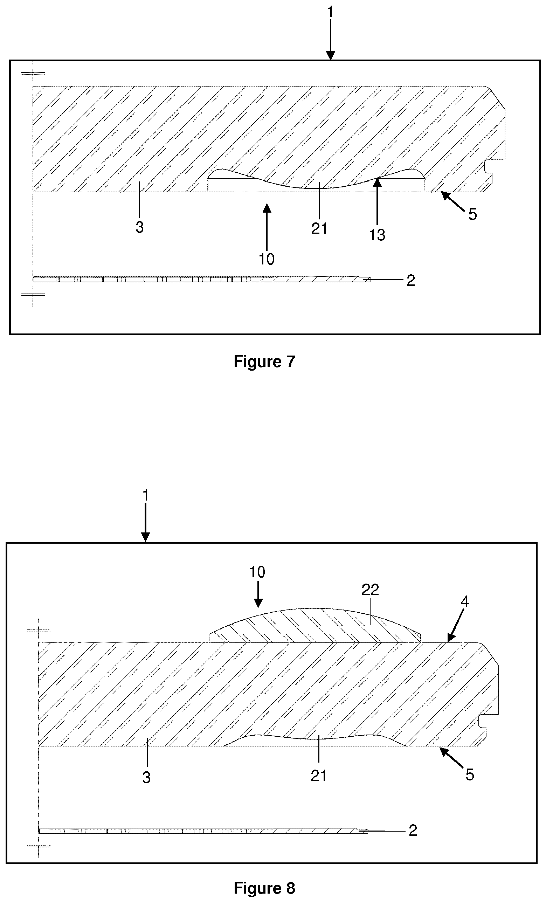

La figure 7 illustre une quatrième variante de réalisation, dans laquelle le dispositif optique 10 est façonné dans l'épaisseur de la glace 3 à partir de la surface inférieure 5 de la glace. Dans cette réalisation, le dispositif optique 10 et la glace 3 forment toujours un ensemble monobloc. La surface inférieure 13 de la lentille 21 du dispositif optique 10 présente une forme asphérique.

Les études de la demanderesse montrent que le dispositif optique selon le premier mode de réalisation offre une lecture agrandie d'une indication, visible sur une plage angulaire augmentée par rapport à l'état de la technique, de l'ordre de 100%.

Dans les trois dernières variantes de réalisation, respectivement associées aux figures 5 à 7, le dispositif optique 10 peut être formé dans la glace par tout procédé, notamment un procédé d'usinage, par exemple à partir d'un laser comme un laser femtoseconde, et/ou par un procédé par attaque chimique.

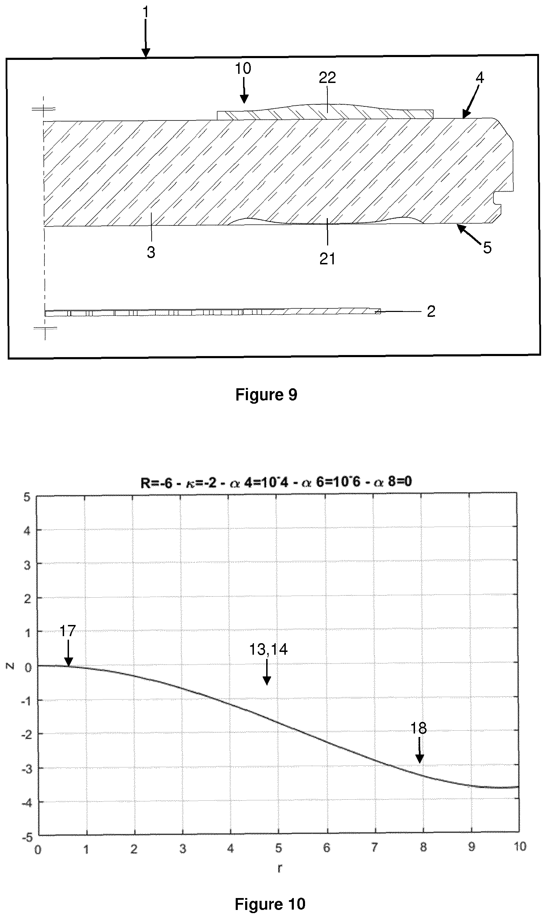

Selon le deuxième mode de réalisation représenté par les figures 8 et 9, le dispositif optique 10 comprend deux lentilles 21, 22 superposées, respectivement agencées au niveau des surfaces supérieure 4 et inférieure 5 de la glace 3 de pièce d'horlogerie.

La figure 8 illustre ainsi une première variante du deuxième mode de réalisation. Le dispositif optique comprend ainsi une première lentille 21 façonnée dans la surface inférieure de la glace 3, de manière similaire à la réalisation de la figure 7. Cette première lentille est asphérique, c'est-à-dire qu'elle comprend au moins une face asphérique. En complément, le dispositif optique 10 comprend une deuxième lentille 22 fixée sur la surface supérieure 4 de la glace, de manière superposée à la première lentille. Cette deuxième lentille 22 est sphérique. Elle apporte un deuxième effet grossissant, complémentaire à celui de la première lentille.

La figure 9 illustre une deuxième variante de réalisation, qui se différencie de la première variante en ce que la deuxième lentille 22 est aussi asphérique. Avantageusement, une telle lentille 22 complète les effets de grossissement opérés par la première lentille 21 tout en atténuant les effets de distorsion générés par la première lentille 21.

Cette deuxième lentille 22 est semblable à la lentille du dispositif optique de la première variante du premier mode de réalisation de la figure 4. En variante, cette deuxième lentille pourrait être similaire à la lentille du dispositif optique des deux autres variantes du premier mode de réalisation des figures 5 et 6. La première lentille 21 reste identique à celle du premier mode de réalisation de la figure 8.

Dans tous les cas, le dispositif optique et/ou la au moins une lentille qu'il comprend occupe une superficie inférieure ou égale à 30% de la superficie totale de la glace de la pièce d'horlogerie.

Les études de la demanderesse montrent que le dispositif optique selon le deuxième mode de réalisation offre une lecture agrandie d'une indication, améliorée en regard de celle offert par le dispositif optique selon le premier mode de réalisation, et visible sur une plage angulaire augmentée par rapport à l'état de la technique, de l'ordre de 100%.

Naturellement, l'invention ne se limite pas aux modes de réalisation décrits. Notamment, ces modes de réalisation peuvent être combinés. De plus, le dispositif optique a été décrit à partir d'une ou deux lentilles superposées. En variante, le dispositif optique peut comprendre trois lentilles ou plus. Ces lentilles sont au moins partiellement superposées. De plus, une lentille a été agencée au niveau d'une surface supérieure ou inférieure d'une glace. En variante, une telle lentille peut être positionnée à tout endroit dans l'épaisseur de la glace. La ou les lentilles peuvent même s'étendre sur toute l'épaisseur de la glace.

D'autre part, sur toutes les variantes représentées, le dispositif optique comprend finalement une lentille avec une portion asphérique, et notamment une face asphérique. Cette face asphérique est convexe. En variante, la lentille pourrait être biconvexe, c'est-à-dire présenter deux faces opposées convexes. De plus, ces deux faces pourraient être toutes deux asphériques. Ainsi, le dispositif optique pourrait comprendre deux surfaces supérieure et inférieure asphériques.

De plus, le contour horizontal du dispositif optique, c'est-à-dire le contour défini par une section du dispositif optique selon un plan horizontal, ou par la projection du dispositif optique sur un plan horizontal, notamment le plan P de la pièce d'horlogerie, peut prendre différentes formes. Il peut, par exemple, être circulaire, carré, rectangulaire, ellipsoïdal.

Les lentilles du dispositif optique peuvent être réalisées en une matière cristalline dure, notamment en corindon, en saphir ou en spinelle. Alternativement, les lentilles du dispositif optique peuvent être réalisées en verre, notamment en verre minéral. Alternativement encore, le matériau formant les lentilles du dispositif optique peut se présenter en polymère, notamment en polyméthacrylate de méthyle (PMMA). Quelles que soient les variantes de réalisation, la glace de la pièce d'horlogerie peut de même être réalisée en une matière cristalline dure, notamment en corindon, en saphir ou en spinelle. De même, la glace peut alternativement être réalisée en verre, notamment en verre minéral ou en polymère, notamment en polyméthacrylate de méthyle (PMMA). La ou les lentilles peuvent être fabriquées ou non dans le même matériau que celui de la glace. Finalement, la au moins une lentille se présente avantageusement en un matériau rigide. Ce matériau rigide est indéformable, et n'est pas prévu pour se déformer lors de l'utilisation normale de la pièce d'horlogerie. Il ne comprend pas ou peu de domaine plastique. La au moins une lentille peut avantageusement être intégralement formée dans ce matériau rigide et indéformable. En variante, la au moins une lentille comprend au moins une enveloppe extérieure l'entourant au moins sensiblement intégralement et est formée en un matériau rigide indéformable.

Dans tous les modes de réalisation, le dispositif optique a été associé à une glace d'une pièce d'horlogerie. Dans ces réalisations, le dispositif optique est fixe relativement à la glace et à la pièce d'horlogerie. En variante, le dispositif optique pourrait être agencé dans la pièce d'horlogerie de manière indépendante de la glace. Par exemple, il pourrait être disposé entre un cadran comprenant un indicateur et une glace de la pièce d'horlogerie. De plus, le dispositif optique a été agencé de manière fixe au sein de la pièce d'horlogerie. Il pourrait en variante être mobile par rapport à la pièce d'horlogerie, par exemple en étant monté sur une aiguille de la pièce d'horlogerie.

L'indicateur 2 de la pièce d'horlogerie peut être prévu pour afficher tout type d'indication, notamment une indication horaire, comme par exemple un affichage de l'heure ou des minutes, ou tout type d'indication dérivée de l'heure, comme une indication calendaire telle que l'indication du quantième, du jour, des mois ou des phases de la Lune. Cet indicateur peut être mobile, et peut être prévu pour afficher une indication particulière au sein d'une fenêtre d'un cadran. Dans ce cas, le dispositif optique est avantageusement superposé à la fenêtre de cadran de sorte à optimiser la visibilité de l'indication apparaissant dans la fenêtre.

Alternativement, l'indicateur peut être fixe et peut, par exemple, comporter plusieurs indications distinctes rapportées en différents emplacements sur un cadran. Dans ce cas, le dispositif optique peut être mobile en regard de l'indicateur de sorte à optimiser la visibilité de l'indication à considérer, qui est une partie seulement de la pluralité des indications de l'indicateur.

Dans tous les cas, les indications peuvent être des annotations comme des chiffres, des lettres, ou bien des couleurs. L'indicateur est avantageusement positionné dans un plan parallèle au plan de la glace et/ou d'une lentille dudit dispositif optique. Le « plan de la glace » correspond avantageusement à un plan parallèle à la surface supérieure de la glace et/ou passant par la surface supérieure de la glace.

Finalement, ladite glace peut :

- participer à former une enveloppe étanche et fixe de la pièce d'horlogerie, et/ou
- être agencée parallèlement au plan dans lequel se trouve un indicateur à agrandir, et/ou
- comprendre au moins une lentille comprenant au moins une face asphérique occupant une surface de superficie inférieure ou égale à 30%, voire inférieure ou égale à 20%, voire inférieure ou égale à 10%, de la superficie totale de la surface supérieure de la glace, et/ou
- comprendre au moins une lentille comprenant au moins une face asphérique superposée dans la direction sensiblement verticale à au moins un indicateur à agrandir de la pièce d'horlogerie, et/ou
- comprendre au moins une lentille comprenant au moins une face asphérique fixe relativement à ladite glace.

De plus, comme cela a été évoqué précédemment, un dispositif optique est considéré asphérique lorsqu'il comprend au moins une face comprenant au moins une portion asphérique. Ainsi, selon un exemple de réalisation représenté par la figure 10, une telle face asphérique 13, 14 peut, par exemple, comprendre une section dont un contour comporte une portion de cercle 17 dans sa partie centrale, et comporte au moins un point d'inflexion 18. Au niveau du point d'inflexion 18 s'opère un changement de concavité ou de convexité du contour de ladite section.

Enfin, une face asphérique d'un dispositif optique selon un mode de réalisation de l'invention peut présenter ou non une symétrie de rotation autour d'un axe vertical central. Par ailleurs, un dispositif optique selon un mode de réalisation de l'invention peut présenter ou non une symétrie relativement à un plan médian vertical.

**Revendications**

1. Glace de pièce d'horlogerie, notamment glace de montre, comprenant un dispositif optique comprenant au moins une lentille destinée à agrandir une indication fournie par une pièce d'horlogerie, **caractérisée en ce que** ladite lentille comprend au moins une face asphérique comprenant au moins une section passant par un plan vertical comprenant un axe optique de direction verticale z, dont au moins un contour peut être défini par l'équation suivante :

$$z(r) = \frac{r^2}{R\left(1 + \sqrt{1 - (1-\kappa)\frac{r^2}{R^2}}\right)} + \alpha_4 r^4 + \alpha_6 r^6 + \cdots$$

où R est le rayon nominal de courbure,
k est la constante de conicité, et
$\alpha_{4,6,\ldots}$ est/sont un/des coefficient/s d'asphéricité,
et où au moins la constante de conicité k et/ou au moins un coefficient d'asphéricité est différent de zéro.

2. Glace de pièce d'horlogerie selon la revendication précédente, **caractérisée en ce que** la au moins une lentille comprend au moins une enveloppe extérieure l'entourant intégralement en matériau rigide indéformable ou **en ce que** la au moins une lentille se présente intégralement en un matériau rigide indéformable et/ou **en ce que** la au moins une lentille est réalisée en une matière cristalline dure.

3. Glace de pièce d'horlogerie selon l'une des revendications précédentes, **caractérisée en ce que** la au moins une lentille comprend au moins une face convexe asphérique.

4. Glace de pièce d'horlogerie selon l'une des revendications précédentes, **caractérisée en ce que** la au moins une face asphérique comprend une symétrie de révolution ou non autour d'un axe vertical.

5. Glace de pièce d'horlogerie selon l'une des revendications précédentes, **caractérisée en ce que** la au moins une face asphérique comprend une section passant par un plan vertical dont au moins un contour comprend une portion de cercle et un point d'inflexion, induisant un changement de concavité ou de convexité.

6. Glace de pièce d'horlogerie selon l'une des revendications précédentes, **caractérisée en ce qu'**il comprend une seule lentille avec au moins une face asphérique, ou deux lentilles, une première lentille comprenant au moins une face asphérique et une deuxième lentille pouvant aussi comprendre ou non au moins une face asphérique.

7. Glace de pièce d'horlogerie selon l'une des revendications précédentes, **caractérisée en ce qu'**elle comprend une lentille comprenant au moins une face asphérique formée ou rapportée sur la surface supérieure ou inférieure de la glace, se présentant dans la même matière ou non que la glace, ou **en ce qu'**elle comprend une lentille comprenant au moins une face asphérique formée directement dans l'épaisseur de la glace.

8. Glace de pièce d'horlogerie selon l'une des revendications précédentes, **caractérisée en ce qu'**elle comprend une première lentille comprenant au moins une face asphérique agencée au niveau de la surface inférieure de la glace, et une deuxième lentille, comprenant au moins une face asphérique ou non, agencée de manière superposée à la première lentille au niveau de la surface supérieure de la glace.

9. Glace de pièce d'horlogerie selon l'une des revendications précédentes, **caractérisée en ce qu'**elle comprend une lentille comprenant au moins une face asphérique et une section passant par un plan parallèle à la surface de la glace sensiblement circulaire ou sensiblement ellipsoïdale.

10. Glace de pièce d'horlogerie selon l'une des revendications précédentes, **caractérisée en ce qu'**elle comprend une lentille comprenant au moins une face asphérique se présentant dans la même matière ou non que la glace.

11. Pièce d'horlogerie, notamment montre, **caractérisée en ce qu'**elle comprend une glace selon l'une des revendications précédentes.

12. Pièce d'horlogerie selon la revendication précédente, **caractérisée en ce qu'**elle comprend au moins un indicateur parmi un indicateur horaire, un affichage de l'heure ou des minutes, un indicateur calendaire tel qu'un indicateur du quantième, du jour, des mois ou des phases de la lune, et/ou un indicateur comprenant toute annotation ou tout motif comme au moins un chiffre, au moins une lettre, et/ou au moins une couleur, et **en ce qu'**elle comprend au moins une lentille comprenant au moins une face asphérique de ladite glace disposée au-dessus de l'indicateur.

**13.** Pièce d'horlogerie selon l'une des revendications 11 ou 12, **caractérisée en ce qu'**elle comprend un indicateur mobile, agencé pour afficher une indication particulière au sein d'une fenêtre d'un cadran de la pièce d'horlogerie, et **en ce qu'**elle comprend au moins une lentille comprenant au moins une face asphérique d'une glace selon l'une des revendications 1 à 10 disposée au-dessus de la fenêtre du cadran de sorte à optimiser la visibilité de l'indication particulière apparaissant dans la fenêtre.

**14.** Pièce d'horlogerie selon l'une des revendications 12 ou 13, **caractérisée en ce qu'**elle comprend un indicateur disposé dans un plan parallèle à ladite glace comprenant la au moins une lentille comprenant au moins une face asphérique, la au moins une lentille comprenant au moins une face asphérique occupant une surface de superficie inférieure ou égale à 30%, voire inférieure ou égale à 20%, voire inférieure ou égale à 10%, de la superficie totale de la surface supérieure de la glace et/ou la au moins une lentille comprenant au moins une face asphérique étant superposée dans la direction sensiblement verticale à au moins un indicateur à agrandir de la pièce d'horlogerie, et/ou la au moins une lentille comprenant au moins une face asphérique étant fixe relativement à ladite glace.

**15.** Pièce d'horlogerie selon l'une des revendications 12 à 14, **caractérisée en ce que** ladite glace forme une enveloppe étanche pour le au moins un indicateur, et comprend au moins une lentille comprenant au moins une face asphérique superposée audit au moins un indicateur.

**16.** Pièce d'horlogerie, comprenant un dispositif optique agencé dans la pièce d'horlogerie, de façon fixe ou mobile par rapport à la pièce d'horlogerie, et de manière indépendante de la glace de la pièce d'horlogerie, le dispositif optique comprenant au moins une lentille destinée à agrandir une indication fournie par la pièce d'horlogerie, **caractérisée en ce que** ladite lentille comprend au moins une face asphérique comprenant au moins une section passant par un plan vertical comprenant un axe optique de direction verticale z, dont au moins un contour peut être défini par l'équation suivante :

$$z(r) = \frac{r^2}{R\left(1 + \sqrt{1 - (1 - \kappa)\frac{r^2}{R^2}}\right)} + \alpha_4 r^4 + \alpha_6 r^6 + \cdots$$

où R est le rayon nominal de courbure,
k est la constante de conicité, et
$\alpha_{4,6,\ldots}$ est/sont un/des coefficient/s d'asphéricité,
et où au moins la constante de conicité k et/ou au moins un coefficient d'asphéricité est différent de zéro.

**Patentansprüche**

**1.** Uhrenglas, insbesondere Armbanduhrenglas, das eine optische Vorrichtung beinhaltet, die mindestens eine Linse beinhaltet, die dazu bestimmt ist, eine durch eine Uhr bereitgestellte Anzeige zu vergrößern, **dadurch gekennzeichnet, dass** die Linse mindestens eine asphärische Fläche beinhaltet, die mindestens einen Abschnitt beinhaltet, der durch eine vertikale Ebene, die eine optische Achse mit vertikaler Richtung z beinhaltet, verläuft und von dem mindestens eine Kontur durch die folgende Gleichung definiert werden kann:

$$z(r) = \frac{r^2}{R\left(1 + \sqrt{1 - (1 - k)\frac{r^2}{R^2}}\right)} + \alpha_4 r^4 + \alpha_6 r^6 + \cdots$$

wobei R der Nennkrümmungsradius ist,
k die konische Konstante ist und
$\alpha_{4,6,\ldots}$ ein oder mehrere asphärische Koeffizienten sind
und wobei mindestens die konische Konstante k und/oder mindestens ein asphärischer Koeffizient ungleich null ist.

2. Uhrenglas nach dem vorhergehenden Anspruch, **dadurch gekennzeichnet, dass** die mindestens eine Linse mindestens eine Außenhülle beinhaltet, welche diese mit einem formfesten starren Material umgibt, oder dass die mindestens eine Linse vollständig aus einem formfesten starren Material besteht und/oder dass die mindestens eine Linse aus einem harten, kristallinen Material gefertigt ist.

3. Uhrenglas nach einem der vorhergehenden Ansprüche, **dadurch gekennzeichnet, dass** die mindestens eine Linse mindestens eine asphärische konvexe Fläche beinhaltet.

4. Uhrenglas nach einem der vorhergehenden Ansprüche, **dadurch gekennzeichnet, dass** die mindestens eine asphärische Fläche eine Rotationssymmetrie um eine vertikale Achse beinhaltet oder nicht.

5. Uhrenglas nach einem der vorhergehenden Ansprüche, **dadurch gekennzeichnet, dass** die mindestens eine asphärische Fläche einen Abschnitt beinhaltet, der durch eine vertikale Ebene verläuft und von dem mindestens eine Kontur ein Kreissegment und einen Wendepunkt, die eine Änderung der Konkavität oder Konvexität bewirken, beinhaltet.

6. Uhrenglas nach einem der vorhergehenden Ansprüche, **dadurch gekennzeichnet, dass** es Folgendes beinhaltet: eine einzige Linse mit mindestens einer asphärischen Fläche oder zwei Linsen, wobei eine erste Linse mindestens eine asphärische Fläche beinhaltet und eine zweite Linse ebenfalls mindestens eine asphärische Fläche beinhalten kann oder nicht.

7. Uhrenglas nach einem der vorhergehenden Ansprüche, **dadurch gekennzeichnet, dass** es eine Linse mit mindestens einer asphärischen Fläche beinhaltet, die auf der oberen oder unteren Oberfläche des Glases gebildet oder angebracht ist und die aus demselben Material wie das Glas besteht oder nicht, oder dass es eine Linse mit mindestens einer asphärischen Fläche beinhaltet, die direkt in der Dicke des Glases gebildet ist.

8. Uhrenglas nach einem der vorhergehenden Ansprüche, **dadurch gekennzeichnet, dass** es eine erste Linse mit mindestens einer asphärischen Fläche, die an der unteren Oberfläche des Glases angeordnet ist, und eine zweite Linse mit mindestens einer asphärischen Fläche oder nicht, die oberhalb der ersten Linse an der oberen Oberfläche des Glases angeordnet ist, beinhaltet.

9. Uhrenglas nach einem der vorhergehenden Ansprüche, **dadurch gekennzeichnet, dass** es eine Linse mit mindestens einer asphärischen Fläche und einem Abschnitt beinhaltet, der durch eine zu der Oberfläche des Glases parallele Ebene verläuft und im Wesentlichen kreisförmig oder im Wesentlichen ellipsenförmig ist.

10. Uhrenglas nach einem der vorhergehenden Ansprüche, **dadurch gekennzeichnet, dass** es eine Linse mit mindestens einer asphärischen Fläche beinhaltet, die aus demselben Material wie das Glas besteht oder nicht.

11. Uhr, insbesondere Armbanduhr, **dadurch gekennzeichnet, dass** sie ein Glas nach einem der vorhergehenden Ansprüche beinhaltet.

12. Uhr nach dem vorhergehenden Anspruch, **dadurch gekennzeichnet, dass** sie mindestens einen Anzeiger von einem Zeitanzeiger, einer Stunden- oder Minutenanzeige, einem Kalenderanzeiger, wie etwa einem Datums-, Tages-, Monats- oder Mondphasenanzeiger, und/oder einem Anzeiger, der irgendeine Angabe oder irgendein Motiv wie mindestens eine Zahl, mindestens einen Buchstaben und/oder mindestens eine Farbe beinhaltet, beinhaltet und dass sie mindestens eine Linse mit mindestens einer asphärischen Fläche des Glases beinhaltet, die oberhalb des Anzeigers angeordnet ist.

13. Uhr nach einem der Ansprüche 11 oder 12, **dadurch gekennzeichnet, dass** sie einen mobilen Anzeiger beinhaltet, der dazu angeordnet ist, eine bestimmte Anzeige innerhalb eines Fensters eines Zifferblatts der Uhr anzuzeigen, und dass sie mindestens eine Linse mit mindestens einer asphärischen Fläche eines Glases nach einem der Ansprüche 1 bis 10 beinhaltet, die oberhalb des Fensters des Zifferblatts angeordnet ist, um die Sichtbarkeit der bestimmten Anzeige, die in dem Fenster erscheint, zu optimieren.

14. Uhr nach einem der Ansprüche 12 oder 13, **dadurch gekennzeichnet, dass** sie einen Anzeiger beinhaltet, der in einer zu dem Glas, welches die mindestens eine Linse mit mindestens einer asphärischen Fläche beinhaltet, parallelen Ebene angeordnet ist, wobei die mindestens eine Linse mit mindestens einer asphärischen Fläche eine Oberflächenfläche einnimmt, die weniger als oder 30 %, insbesondere weniger als oder 20 %, insbesondere weniger als oder 10 % der Gesamtfläche der oberen Oberfläche des Glases beträgt, und/oder wobei die mindestens eine Linse mit mindestens einer asphärischen Fläche in der im Wesentlichen vertikalen Richtung oberhalb mindestens eines zu vergrößernden Anzeigers der Uhr angeordnet ist und/oder wobei die mindestens eine Linse mit mindestens einer asphärischen Fläche relativ zu dem Glas fest ist.

15. Uhr nach einem Ansprüche 12 bis 14, **dadurch gekennzeichnet, dass** das Glas eine dichte Hülle für den mindestens einen Anzeiger bildet und mindestens eine Linse mit mindestens einer asphärische Fläche beinhaltet, die oberhalb des mindestens einen Anzeigers angeordnet ist.

16. Uhr, die eine optische Vorrichtung beinhaltet, die in Bezug auf die Uhr fest oder mobil und unabhängig von dem Glas der Uhr in der Uhr angeordnet ist, wobei die optische Vorrichtung mindestens eine Linse beinhaltet, die dazu bestimmt ist, eine durch die Uhr bereitgestellte Anzeige zu vergrößern, **dadurch gekennzeichnet, dass** die Linse mindestens eine asphärische Fläche beinhaltet, die mindestens einen Abschnitt beinhaltet, der durch eine vertikale Ebene, die eine optische Achse mit vertikaler Richtung z beinhaltet, verläuft und von dem mindestens eine Kontur durch die folgende Gleichung definiert werden kann:

$$z(r) = \frac{r^2}{R\left(1 + \sqrt{1 - (1-k)\frac{r^2}{R^2}}\right)} + \alpha_4 r^4 + \alpha_6 r^6 + \cdots$$

wobei R der Nennkrümmungsradius ist,
k die konische Konstante ist und
$\alpha_{4,6,\ldots}$ ein oder mehrere asphärische Koeffizienten sind
und wobei mindestens die konische Konstante k und/oder mindestens ein asphärischer Koeffizient ungleich null ist.

## Claims

1. A timepiece glass, in particular a watch glass, comprising an optical device comprising at least one lens intended to enlarge an indication supplied by a timepiece, **characterized in that** said lens comprises at least one aspherical face comprising at least one section passing through a vertical plane comprising an optical axis of vertical direction z, of which at least one outline can be defined by the following equation:

$$z(r) = \frac{r^2}{R\left(1 + \sqrt{1 - (1-\kappa)\frac{r^2}{R^2}}\right)} + \alpha_4 r^4 + \alpha_6 r^6 + \cdots$$

in which R is the nominal radius of curvature,
k is the constant of conicity, and
$\alpha_{(4,6,\ldots)}$ is/are coefficient/s of asphericity,
and in which at least the constant of conicity k and/or at least one coefficient of asphericity is different from zero.

2. The timepiece glass as claimed in the preceding claim, **characterized in that** the at least one lens comprises at least one outer envelope surrounding it fully made of non-deformable rigid material or **in that** the at least one lens is fully made of non-deformable rigid material and/or **in that** the at least one lens is produced in a hard crystalline material.

3. The timepiece glass as claimed in one of the preceding claims, **characterized in that** the at least one lens comprises at least one aspherical convex face.

4. The timepiece glass as claimed in one of the preceding claims, **characterized in that** the at least one aspherical face comprises a symmetry of revolution or not about a vertical axis.

5. The timepiece glass as claimed in one of the preceding claims, **characterized in that** the at least one aspherical face comprises a section passing through a vertical plane of which at least one outline comprises a portion of a circle and a point of inflection, inducing a change of concavity or of convexity.

6. The timepiece glass as claimed in one of the preceding claims, **characterized in that** it comprises a single lens with at least one aspherical face, or two lenses, a first lens comprising at least one aspherical face and a second lens comprising or not at least one aspherical face.

7. The timepiece glass as claimed in one of the preceding claims, **characterized in that** it comprises a lens comprising at least one aspherical face formed on or added to the top or bottom surface of the glass, made of the same material or not as the glass, or **in that** it comprises a lens comprising at least one aspherical face formed directly in the thickness of the glass.

8. The timepiece glass as claimed in one of the preceding claims, **characterized in that** it comprises a first lens comprising at least one aspherical face arranged on the bottom surface of the glass, and a second lens, comprising at least one aspherical or non-aspherical face, arranged superposed on the first lens on the top surface of the glass.

9. The timepiece glass as claimed in one of the preceding claims, **characterized in that** it comprises a lens comprising at least one aspherical face and a section passing through a plane parallel to the surface of the glass that is substantially circular or substantially ellipsoid.

10. The timepiece glass as claimed in one of the preceding claims, **characterized in that** it comprises a lens comprising at least one aspherical face made of the same material or not as the glass.

11. A timepiece, in particular a watch, **characterized in that** it comprises a glass as claimed in one of the preceding claims.

12. The timepiece as claimed in the preceding claim, **characterized in that** it comprises at least one indicator out of an hour indicator, a display of the hour or of the minutes, a calendar indicator such as an indicator of the day of the month, of the day, of the months or of the phases of the moon, and/or an indicator comprising any annotation or any pattern such as at least one numeral, at least one letter, and/or at least one color, and **in that** it comprises at least one lens comprising at least one aspherical face of said glass arranged above the indicator.

13. The timepiece as claimed in one of claims 11 or 12, **characterized in that** it comprises a mobile indicator, arranged to display a particular indication in a window of a dial of the timepiece, and **in that** it comprises at least one lens comprising at least one aspherical face of a glass as claimed in one of claims 1 to 10 arranged above the window of the dial so as to optimize the visibility of the particular indication appearing in the window.

14. The timepiece as claimed in one of claims 12 or 13, **characterized in that** it comprises an indicator arranged in a plane parallel to said glass comprising the at least one lens comprising at least one aspherical face, the at least one lens comprising at least one aspherical face occupying a surface area less than or equal to 30%, even less than or equal to 20%, even less than or equal to 10%, of the total surface area of the top surface of the glass and/or the at least one lens comprising at least one aspherical face being superposed in the direction substantially vertical to at least one indicator to be enlarged of the timepiece, and/or the at least one lens comprising at least one aspherical face being fixed relative to said glass.

15. The timepiece as claimed in one of claims 12 to 14, **characterized in that** said glass forms a tight envelope for the at least one indicator, and comprises at least one lens comprising at least one aspherical face superposed on said at least one indicator.

16. A timepiece, comprising an optical device arranged in the timepiece, the optical device being fixed or mobile relative to the timepiece, and independently of the glass of the timepiece, the optical device comprising at least one lens intended to enlarge an indication supplied by a timepiece, **characterized in that** said lens comprises at least one aspherical face comprising at least one section passing through a vertical plane comprising an optical axis of vertical direction z, of which at least one outline can be defined by the following equation:

$$z(r) = \frac{r^2}{R\left(1 + \sqrt{1 - (1-\kappa)\frac{r^2}{R^2}}\right)} + \alpha_4 r^4 + \alpha_6 r^6 + \cdots$$

in which R is the nominal radius of curvature,
k is the constant of conicity, and
$\alpha_{(4,6,\ldots)}$ is/are coefficient/s of asphericity,
and in which at least the constant of conicity k and/or at least one coefficient of asphericity is different from zero.

Figure 1

Figure 2

Figure 3

Figure 4

Figure 5

Figure 6

Figure 7

Figure 8

EP 3 575 888 B1

Figure 9

Figure 10

17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006062090 A
- FR 1130973 A